# EUROPEAN PATENT SPECIFICATION

(11) **EP 1 659 362 B1**
(45) Date of publication and mention of the grant of the patent: **02.07.2008**
(21) Application number: 05110924.7
(22) Date of filing: 18.11.2005
(51) Int. Cl.: G01B 3/12

(54) **Measuring and leveling device**
Mess- und Nivelliergerät
Dispositif de mesure et nivellement

(30) Priority: 18.11.2004 US 629277 P; 20.04.2005 US 110633
(43) Date of publication of application: 24.05.2006
(73) Proprietor: Black & Decker, Inc., Newark, DE 19711 (US)
(72) Inventor: Marshall, James D., Mallorytown, Ontario KOE 1RO (CA); Hobden, Robert, Ottawa, Ontario K2C OH5 (CA)
(74) Representative: Clark, Charles Robert

(56) References cited:
- WO-A-01/04566
- WO-A-88/00776
- NL-C1- 1 005 770
- US-B1- 6 249 987
- US-B1- 6 415 518
- PATENT ABSTRACTS OF JAPAN vol. 015, no. 310 (M-1144), 8 August 1991 (1991-08-08) & JP 03 114930 A (NIPPON SEIKI CO LTD), 16 May 1991 (1991-05-16)

## Description

The present invention relates to tools and, more specifically, to a device which provides measured distances, as well as a laser level.

In the building or construction fields, as well as in residential use, it is desirable to have a tool that is capable of measuring the distance between two points as well as providing a laser level line between the two points. When a workman is, for example, laying tile, it is desirable to have a level line, both vertically and horizontally, so that the workmen can lay the tile square and along a straight line. Also, workmen desire to know the distance between points, such as studs, so that the work can be attached to the studs. It is desirable to have a tool which is capable of providing both a measuring and leveling feature. Further, it is desirable to provide distance measurements for point to point measurements on a surface, in combination with a laser line generator or a laser line level to aid in layout work involving measurement, marking distances, parallel or perpendicular line projection, and plumb or level line projection.

WO 01 / 04 566 describes a tape measure device. One end of the measuring tape can be hooked to the edge of a surface to be measured. Then the housing of the tape measure is moved relative to the surface, whereby the measuring tape is drawn out of the housing. The housing includes a power source and an encoder measuring the length of the drawn out measuring tape. The encoder is coupled through an electronics package to a display mechanism for displaying the distance travelled by the housing. The display further indicates the angular orientation of the tape determined by an inclinometer provided in said housing.

According to the present invention, there is provided a measuring tool comprising:
a housing which, in use of the tool, is moved relative to a surface;
an electronic package positioned in said housing and a power source electrically coupled with said electronic package;
a display mechanism electrically coupled with said electronics package; and
an encoder mounted with said housing and electrically coupled with said electronic package, said encoder travelling between a first and second point, said electronic package determining the distance travelled and displaying a readout on said display mechanism.

The encoder comprises a roller ball or optical encoder and provides signals to the electronic package indicative of the distance travelled by said housing relative to said surface along both of two orthogonal axes relative to the housing. Alternatively, the encoder comprises a wheel alternately rotatable about each of two orthogonal axes and provides signals to the electronic package indicative of the distance travelled by the housing relative to said surface along the selected one of said axes.

The present invention provides a contact measurement system capable of measuring the distance traversed from a first point on the surface to a second point on the same surface in one or two axes. The measurement function can be used in combination with a laser line generating device with leveling function (self leveling or manual leveling) or without leveling function.

The tool may be configured for use on horizontal and vertical surfaces. The tool is capable of functioning in a self-leveling, manual leveling or line lock mode. On vertical surfaces, the tool could be used to project one or more level and/or plumb lines. Also, the device can measure the distance from, or to, vertical or horizontal reference locations to a second location. This enables marking of parallel level or plumb lines at specific distance intervals or the measurement of distance between or from existing surface features such as edges, holes or the like for layout and/or marking purposes.

The invention enables fixed offset calibrations from one or more reference surfaces on the exterior of the device to enable zeroing to an adjacent surface for measurement from that surface. The present invention could incorporate a central hole for location marking and measurement references. The central hole may be coincident with the level and/or plumb laser lines. Also, the present invention could be set to measure from one or more referenced edges to the center hole depending on the need or the application.

The present invention digitally displays the distance measured in an inch or metric mode. Additionally, the invention may include a programmable audible tone to alert each time a preset distance interval is reached.

The present invention utilizes a contact measurement device such as a wheel, roller or ball and roller to distance transducer, or non contact_measurement device such as an optical system, which is utilized in mouse or track ball applications.

The present invention enables measurement along first and second axes on a surface. Also, the present invention provides projection lasers which project in vertical, horizontal and/or oblique direction.

From the following description, taken in conjunction with the attached drawings, other objects and advantages of the present invention will become apparent to those skilled in the art.
Figure 1 is a perspective view of a tool which does not form part of the present invention.
Figure 2 is a rear elevation view and does not form part of the present invention.
Figure 3 is a perspective view of a first embodiment of the present invention.
Figure 4 is a rear perspective view of Figure 3.
Figure 5 is a perspective view of another embodiment of the present invention.
Figure 6 is a perspective view of an additional embodiment of the present invention.
Figure 7 is a perspective view of an additional embodiment of the present invention.
Figure 8 is a rear plan view of the embodiment of Figure 7.
Figure 9 is an enlarged perspective view of the view of Figure 8.
Figures 10A and 10B are plan schematic views of the measurement assembly.
Figure 11 is an enlarged schematic view of the measurement assembly.

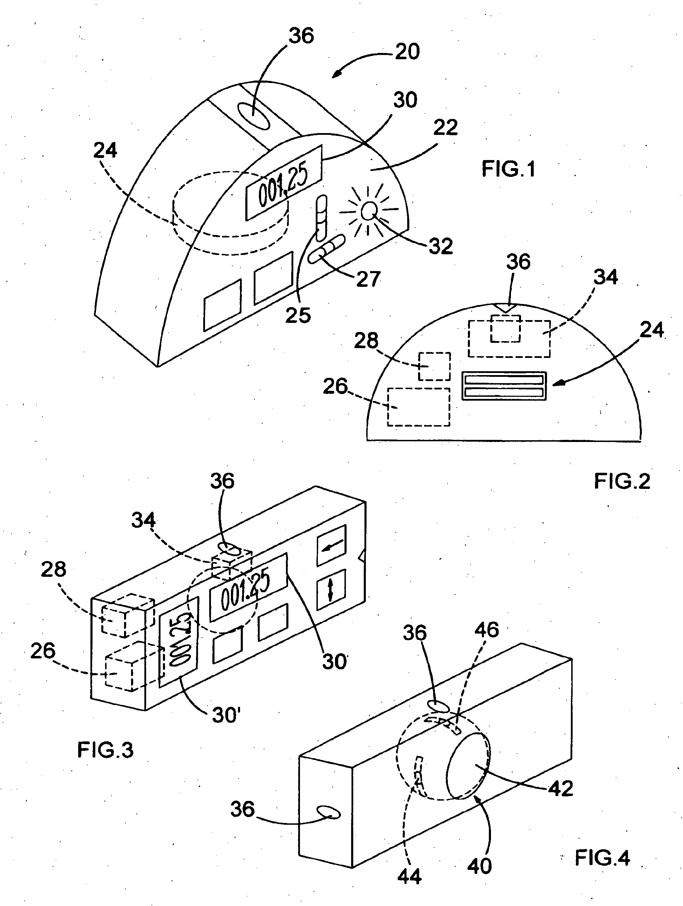

Turning firstly to the Figures 1 and 2, which do not form part of the present invention is illustrated and designated with the reference numeral 20. The measuring tool 20 includes a housing 22, distance encoder 24, electronics package 26 and a power source 28, such as a battery.

The housing 22 has a digital distance display 30 positioned on the housing 22. Also, the housing includes an audible tone mechanism 32 which is electrically connected with the electronics package 26.

The distance encoder 24, using a wheel, is electrically coupled with the electronics package 26. The distance encoder 24 and its function will be described herein.

A level line generator 34 is positioned within the housing 20. The laser level line generator 34 may include a self-leveling mechanism such as a pendulum or the like, or an external level reference such as bubble vials 25, 27 or the like, and/or may be manually set to provide a projected laser line. The laser line projects through an aperture or a lens 36 in the housing 22. The operation of the measuring device and the laser level will be discussed below.

Moving to Figures 3 and 4, a first embodiment of the present invention is shown. Here, the elements which are the same as those illustrated in figures 1 and 2 are identified with the same reference numerals. The housing 22 has a shape different than that of Figures 1 and 2. The distance encoding device 40 is different from that previously described. Here, the distance encoder 40 may include a roller ball 42. The roller ball 42 is coupled with a pair of contacts 44 and 46 to provide dual axis encoding. The roller ball is like those used in computer mouses. This enables the measuring device 20 to determine distances in both a horizontal and vertical direction. Thus, the housing 22 includes an additional digital display 30' to display the measured distance in a vertical direction. Also, the ball encoder 42 could be substituted with an optical encoder, like those utilized in computer mouses. Further, a pair of dual wheels could be substituted for the rolling ball to provide measurement in two directions. Also, a single elongated roller could be used.

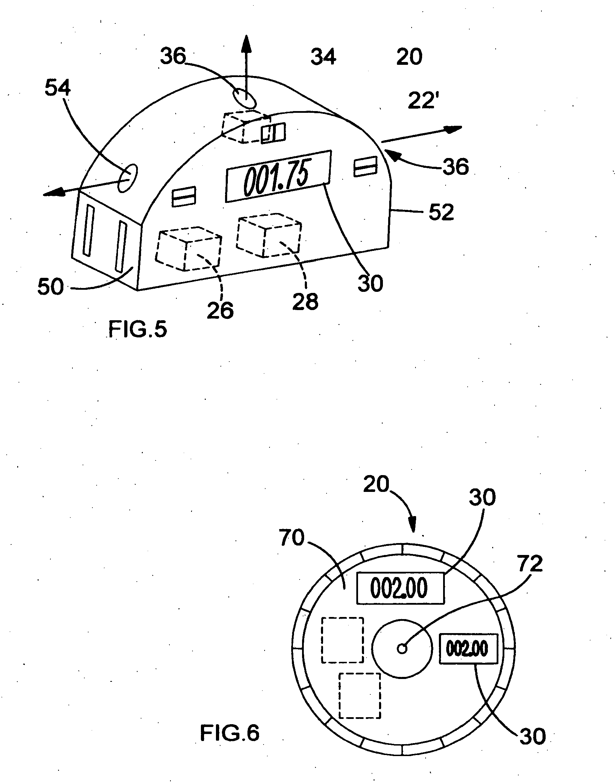

Turning to Figure 5, an additional embodiment of the present invention is shown. Elements which are included in this embodiment, which are the same as those previously discussed, are identified with the same reference numerals.

Figure 5 illustrates a measuring device 20, which includes a housing 22', which includes a pair of reference surfaces 50 and 52 on its end. The reference surfaces 50 and 52 are flat and planar so that they can be positioned against an additional surface to enable the tool to be utilized from a referenced surface. Also, the tool includes an additional laser line aperture 54 so that a laser line can be projected both vertically and horizontally out of the housing 22'. Thus, the laser lines can be projected in one of three directions. Also, the housing could be modified with an aperture so the laser lines project in a fourth direction. Also, if needed the housing and laser generator could be modified to project at any desired angle. Also, a distance encoder 24, with a wheel, may extend out of the back surface or bottom surface of the housing 22'.

Figure 6 illustrates another embodiment of the present invention. Figure 6 illustrates a measuring tool 20 which includes a disk shaped housing 70. The housing 70 includes a central hole 72 which enables a measurement reference for marking or viewing a specific location. The tool 20 includes a single ball or optical device or a dual ball and roller device as described to provide distance encoding. Also, two digital readouts 30 are present to provide distance indicators for both vertical and horizontal directions.

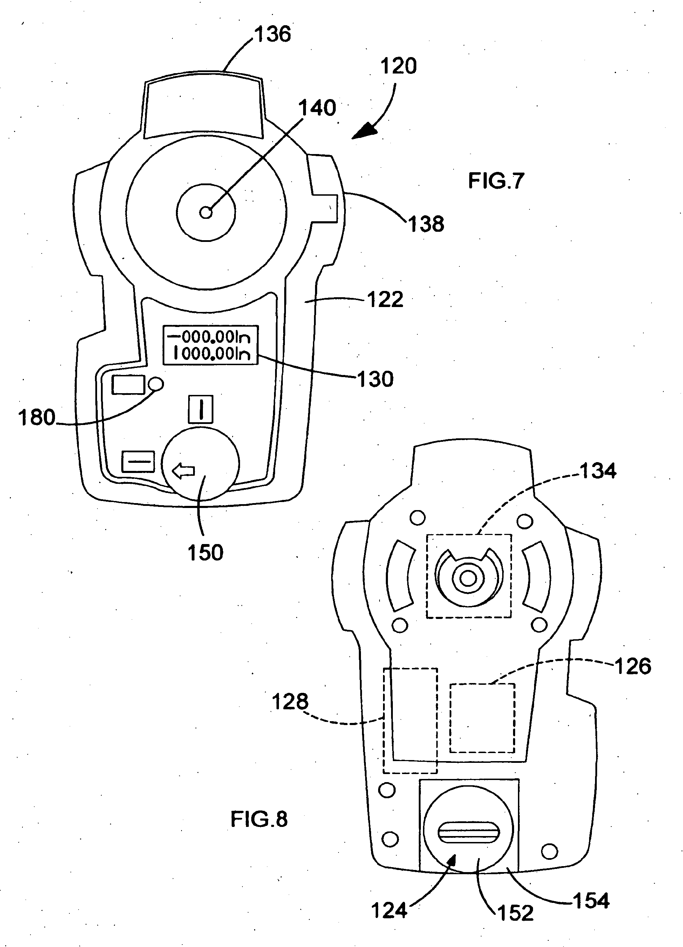

Moving to Figures 7 through to 11, an additional embodiment is shown. The measuring leveling tool 120 includes a housing 122 which includes a distance encoder 124, electronic package 126, power source 128, and digital display 130. The electronics 126 are electrically coupled with the distance encoder 124, as well as with the power source 128 and digital distance display readout 130. Further, a laser line generator 134 is positioned within the housing 122. The laser line generator 134 is aligned with apertures 136 and 138. Thus, the laser line can be projected at angles 90 degrees with respect to one another to provide a projected horizontal and/or vertical laser line. Also, a central aperture 140 is positioned at the intersection of the projected laser lines. The aperture enables marking and viewing as discussed above. The laser leveling generator 134, like those previously discussed, is also coupled with the power source 128 and electronics 126. The laser generator 134 may be a pendulum self-leveling type or it may be locked in position to be used manually as a line generator.

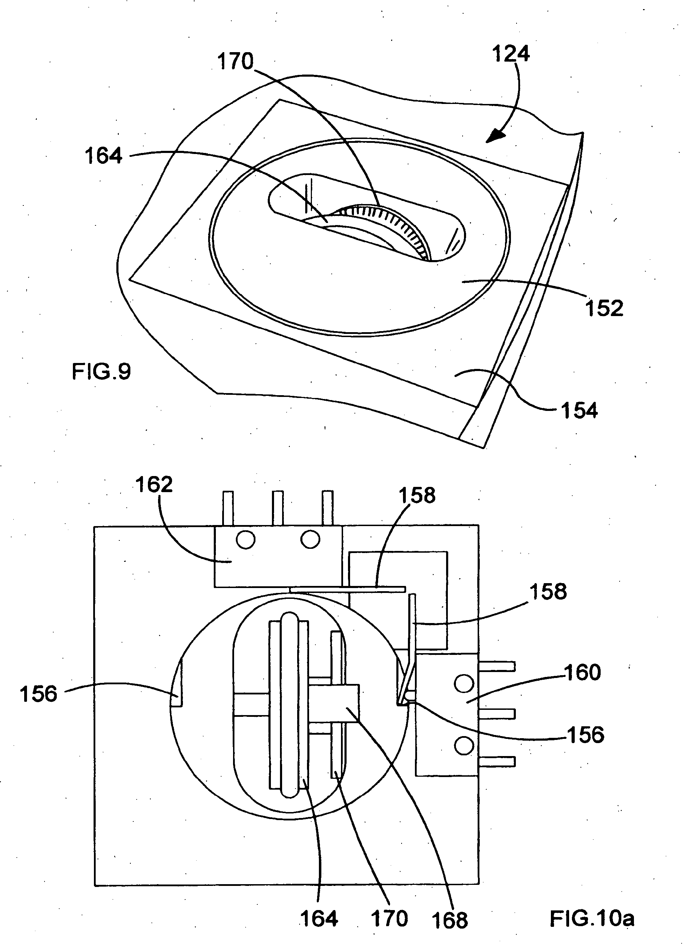

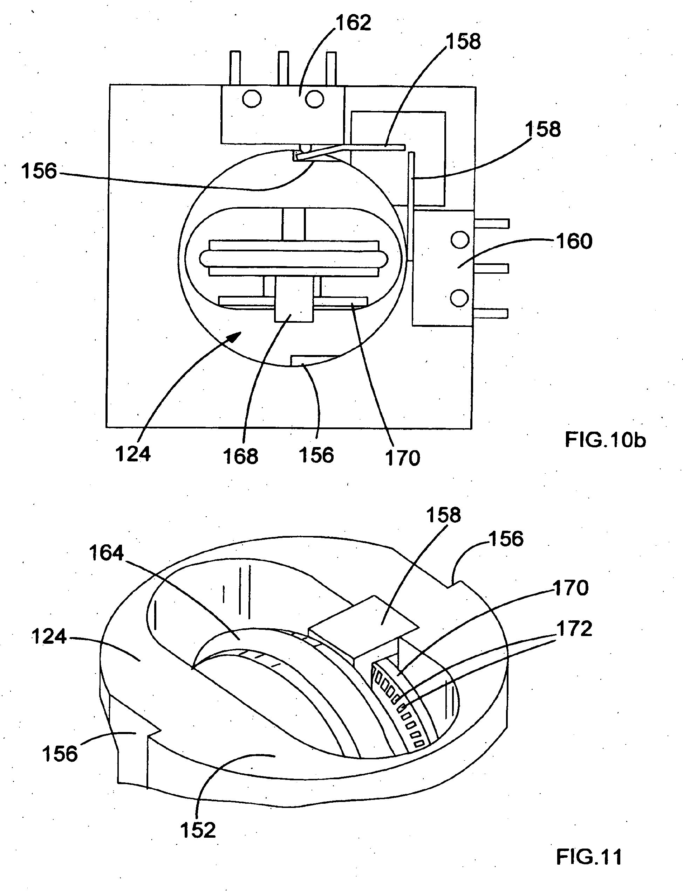

The distance encoder mechanism 124 includes a knob 150 which acts as an axis control mechanism switching the axis between a horizontal and vertical position. The knob 150 is coupled with a yoke 152 which projects through a main body block 154 positioned within the housing 122. The yoke 152 is rotatably positioned within the main body 154. Thus, the yoke 152 can be rotated between a horizontal and vertical position within the main body 154. The yoke 152 includes stops 156 to enable accurate positioning of the yoke in the main body with respect to horizontal and vertical. Springs 158 are positioned within the stops 156 to prohibit movement of the yoke and to lock the yoke in the horizontal and vertical positions. The springs 158 activate switches 160 and 162. When a spring is in a stop, the designated switch is in an OFF position, as illustrated in Figures 10A and 10B. When the spring is pressed against the contact, that switch is activated. The switches 160, 162 activates the processor in the electronics packagers to provide a vertical or horizontal direction.

A single wheel (or pair of wheels) 164 is rotatably mounted about a pin 166. A sensor 168 is positioned adjacent to an encoder wheel 170 which is coupled with the wheel 164. The encoder wheel 170 has a plurality of apertures, as best seen in Figure 13. As the encoder wheel apertures 172 pass the sensor 168, signals are sent to a processor in the electronics package 126, which determines the distance traveled by the wheel 164. This distance is then displayed on the digital display 130.

In use, whether a vertical or horizontal distance is to be measured, the knob 150 Is rotated to the desired position. When the knob 150 is rotated, the single wheel (or pair of wheels) 164 is moved from a horizontal to vertical or vice versa direction. Also, the desired switch 160, 162 is activated notifying the processor that a vertical or horizontal direction is to be measured. As the tool is moved along the vertical or horizontal direction, the sensor provides signals to the processor, which monitors the output of the sensor. The processor calculates the distance the wheel 164 is rolled along the surface and displays the information on the digital display 130. The pivoting of the wheel 164 from horizontal to vertical enables the orientation of the wheel to be changed and therefore the direction of measurement to be changed relative to the body of the measuring device. As the yoke 152 is pivoted, the stops 156 ensure that the selectable directions of measurement are perpendicular to each other and suitably aligned with relevant device features such as the external reference surfaces which fix the direction projected lasers and self-leveling projected lasers.

Since a single encoder and wheel are used to measure along two axis, the processor requires a way to differentiate signals from each other. The two switches 160, 162 are activated when the stop is engaged. Thus, when the stop is engaged, the wheel is perfectly aligned. A variation of the design could consist of a single switch that would be activated by a 90 degree rotation of the yoke.

Also, a zeroing button 180 may be included. The zeroing button 180 enables the user to set the distance counter for both axis to zero. Measurements can then be made along either axis by changing the orientation of the measuring wheel and not the entire tool. In wall measurement applications, this is critical as it enables incorporation of a self-leveling or manual leveling laser which is a critical component for wall layout work. The self-leveling or manual leveling laser permits the user to make reference marks on a surface, either level or plumb, with the measurement start position. A fixed direction projected laser enables the user to keep the tool aligned correctly along the measurement paths, perhaps aimed at a reference mark.

Ordinarily, the measuring laser tool is utilized as follows. A starting point is determined by either marking or having a previously marked surface. The measuring axis control knob 150 is rotated to provide the desired horizontal or vertical orientation. The laser generator 134 is activated to show a line which would extend to or point away from a desired mark. The tool is then rolled along the surface to provide a desired measurement. If a predetermined measurement is already picked, this measurement could be programmed into the device so that it would make an audible noise when that particular distance is reached. Also, the digital readout provides the distance traveled by the device as it moves along the line. Also, the device could be programmed to provide information such as where to position marks when the distance is to be divided by a particular number.

## Claims

1. A measuring tool comprising:
a housing (22) which, in use of the tool, is moved relative to a surface;
an electronic package (26) positioned in said housing (22) and a power source (28) electrically coupled with said electronic package (26);
a display mechanism (30) electrically coupled with said electronics package (26); and
an encoder (24) mounted with said housing (22) and electrically coupled with said electronic package (26), said encoder (24) traveling between a first and second point, said electronic package (26) determining the distance traveled and displaying a readout on said display mechanism (30);
**characterized in that** the encoder (24) (i) comprises a roller ball (42) or optical encoder and provides signals to the electronic package (26) indicative of the distance travelled by said housing (22) relative to said surface along both of two orthogonal axes relative to the housing (22), or (ii) comprises a wheel (164) alternately rotatable about each of two orthogonal axes and provides signals to the electronic package (26) indicative of the distance travelled by the housing (22) relative to said surface along the selected one of said axes.

2. The measuring tool according to Claim 1, wherein said encoder (24) is a contact measuring device.

3. The measuring tool according to Claim 1, wherein said encoder (24) is a noncontact measuring device.

4. The measuring tool according to any one of the preceding Claims, wherein said display mechanism (30) includes a pair of displays.

5. The measuring tool according to any one of the preceding claims, further comprising:
a leveling mechanism (34) coupled with said housing (22), wherein said level mechanism (34) includes a laser line generator.

## Patentansprüche

1. Messwerkzeug umfassend:
ein Gehäuse (22), das bei der Verwendung des Werkzeugs relativ zu einer Oberfläche bewegt wird,
eine Elektronikeinheit (26), die in dem Gehäuse (22) angeordnet ist, und eine Stromquelle (28), die elektronisch mit der Elektronikeinheit (26) verbunden ist, einen Anzeigemechanismus (30), der elektrisch mit der Elektronikeinheit (26) verbunden ist, und
einen Messgeber (24), der an dem Gehäuse (22) angebracht und elektrisch mit der Elektronikeinheit (26) verbunden ist, wobei sich der Messgeber (24) zwischen einem ersten und einem zweiten Punkt bewegt, wobei die Elektronikeinheit (26) die zurückgelegte Wegstrecke bestimmt und
eine Ausgabe auf dem Anzeigemechanismus (30) anzeigt,
**dadurch gekennzeichnet, dass** (i) der Messgeber (24) eine Wälzkugel (42) oder einen optischen Messgeber umfasst und Signale an die Elektronikeinheit (26) liefert, die die Wegstrecke anzeigen, die durch das Gehäuse (22) relativ zu der Oberfläche entlang beider von zwei senkrecht relativ zu dem Gehäuse (22) verlaufender Achsen zurückgelegt wurde, oder (ii) der Messgeber (24) ein Rad (164) umfasst, das abwechselnd um jede von zwei senkrechten Achsen drehbar ist und Signale an die Elektronikeinheit (26) liefert, die die Wegstrecke anzeigen, die durch das Gehäuse (22) relativ zu der Oberfläche entlang der ausgewählten von den Achsen zurückgelegt worden ist.

2. Messwerkzeug nach Anspruch 1, wobei der Messgeber (24) ein Kontaktmessgerät ist.

3. Messwerkzeug nach Anspruch 1, wobei der Messgeber (24) ein kontaktloses Messgerät ist.

4. Messwerkzeug nach einem der vorhergehenden Ansprüche, wobei der Anzeigemechanismus (30) ein Paar von Anzeigen umfasst.

5. Messwerkzeug nach einem der vorhergehenden Ansprüche, ferner umfassend:
einen Nivelliermechanismus (34), der mit dem Gehäuse (22) verbunden ist, wobei der Nivelliermechanismus (34) eine Einheit zum Erzeugen einer Laserlinie umfasst.

## Revendications

1. Outil de mesure comprenant :
un boîtier (22) qui, durant l'utilisation de l'outil, est déplacé par rapport à une surface ;
une unité électronique (26) positionnée dans ledit boîtier (22) et une source d'énergie (28) couplée électriquement à ladite unité électronique (26) ;
un mécanisme d'affichage (30) couplé électriquement avec ladite unité électronique (26) ; et
un encodeur (24) monté avec ledit boîtier (22) et couplé électriquement avec ladite unité électronique (26), ledit encodeur (24) se déplaçant entre un premier et un deuxième point, ladite unité électronique (26) déterminant la distance parcourue et affichant une mesure sur ledit mécanisme d'affichage (30) ;
**caractérisé en ce que** l'encodeur (24) (i) comprend une bille tournante (42) ou encodeur optique et fournit des signaux à l'unité électronique (26) indicatifs de la distance parcourue par ledit boîtier (22) par rapport à ladite surface suivant les deux axes orthogonaux par rapport au boîtier (22), ou (ii) comprend une roue (164) rotative en alternance autour de chacun de deux axes orthogonaux et fournit des signaux à l'unité électronique (26) indicatifs de la distance parcourue par ledit boîtier (22) par rapport à ladite surface suivant celui sélectionné desdits axes orthogonaux.

2. Outil de mesure selon la revendication 1, dans lequel ledit encodeur (24) est un dispositif de mesure à contact.

3. Outil de mesure selon la revendication 1, dans lequel ledit encodeur (24) est un dispositif de mesure sans contact.

4. Outil de mesure selon l'une quelconque des revendications précédentes, dans lequel ledit mécanisme d'affichage (30) comprend deux affichages.

5. Outil de mesure selon l'une quelconque des revendications précédentes, comprenant en outre :
un mécanisme de nivellement (34) avec ledit boîtier (22), dans lequel ledit mécanisme de nivellement (34) comprend un générateur de ligne laser.
